# EUROPÄISCHE PATENTSCHRIFT

(11) **EP 2 776 192 B1**
(45) Veröffentlichungstag und Bekanntmachung des Hinweises auf die Patenterteilung: **24.02.2016**
(21) Anmeldenummer: 12775440.6
(22) Anmeldetag: 09.10.2012
(51) Int. Cl.: B23B 31/16, B23B 31/12

(54) **SPANNFUTTER EINER WERKZEUGMASCHINE ZUR BEARBEITUNG EINES ROHRFÖRMIGEN, ROTIERENDEN WERKSTÜCKS**
CHUCK FOR A MACHINE TOOL FOR WORKING A ROTATING TUBULAR WORKPIECE
MANDRIN POUR UNE MACHINE-OUTIL POUR USINER UNE PIÈCE TUBULAIRE EN ROTATION

(30) Priorität: 08.11.2011 DE 102011117881
(43) Veröffentlichungstag der Anmeldung: 17.09.2014
(73) Patentinhaber: SMS Meer GmbH, 41069 Mönchengladbach (DE)
(72) Erfinder: ESSER, Karl-Josef, 41179 Mönchengladbach (DE); DERIX, Rainer, 52525 Heinsberg (DE)
(74) Vertreter: Grosse, Wolf-Dietrich Rüdiger
(86) Internationale Anmeldenummer: PCT/EP2012/004217
(87) Internationale Veröffentlichungsnummer: WO 2013/068067

(56) Entgegenhaltungen:
- DE-A1- 3 304 876
- DE-A1-102006 027 988
- US-A- 3 814 448

## Beschreibung

Die Erfindung betrifft ein Spannfutter einer Werkzeugmaschine zur Bearbeitung eines rohrförmigen, gemäß Anspruch 1.

Ein Spannfutter gemäß dem Oberbegriff des Anspruchs 1 ist aus DE 33 04 876 A1 bekannt.

Eine Werkzeugmaschine zur Bearbeitung der Rohrenden, insbesondere zum Schneiden von Gewindeanschlüssen, des um eine Drehachse rotierenden rohrförmigen Werkstücks ist aus der DE 10 2009 053 679 A1 bekannt. Das Rohrgewinde wird in der Regel bei einmaligem Überfahren der üblich in einem Revolverkopf angeordneten Werkzeuge über das Rohrende des eingespannten rohrförmigen Werkstücks bzw. Rohres hergestellt, wobei die Bewegungen der Werkzeuge numerisch gesteuert werden. Zum Einspannen des Rohres besitzt eine Werkzeugmaschine vorne, dort wo der Revolverkopf mit den Werkzeugen zum Einsatz kommt ein Vorderendfutter und an der rückwärtigen Seite ein Hinterendfutter, die das Rohr konzentrisch zur Drehachse spannen. Ein Bearbeitungszentrum mit mlnimal zwei gegenüberliegenden Werkzeugmaschinen ist entsprechend mit vier Spannfuttern ausgerüstet. Sowohl das Vorderend- als auch das Hinterendspannfutter weist zum Lösen und Spannen des Werkstücks vorzugsweise drei Spannschieber mit Spannbacken auf.

Bei solchen Gewlndeschneid-Maschinen mit drehendem Rohr und Revolverköpfen mit aufgesetzten, über NC-Achsen gesteuerten Werkzeugen erfordert die Bearbeitung mehrere Spannfunktionen. Die Rohre müssen sich erstens mit direkter Ausrichtung zur Maschinenmitte zentrisch und zweitens mit Anpassung an drittens extern zentrisch mittenzentrierend gespannte Rohre ausgleichend spannen lassen, Unter einem externen zentrischen Spannen wird eine zusätzliche Einspannung der aus dem Vorderendfutter herausragenden Rohrenden Im Bereich bzw. nahe der später zu fertigenden Gewinde verstanden. Das geht mit einem ausgleichenden Spannen mittels der Spannschieber des Vorderendspannfutters einher, wenn sich die Spannschieber an das über die Länge gegebenenfalls etwas gekrümmte Rohr ausgleichend und somit nicht genau zentrisch anlegen können müssen. Derartige Vorderendspannfutter sind daher sehr komplex und bei in der Praxis bekannten Ausführungen erfolgt das Spannen und Lösen der Spannschieber bzw, der von diesen getragenen Spannbacken über Keilsysteme mit rechtwinkliger Umlenkung parallel zur Mitte bzw. Drehachse des Spannfutters. Das bedingt große Durchmesser und Längen der Spannfutter mit entsprechend großer, für den Betrieb nachteiliger Masse.

Bei einem aus der US 3.814.448 A bekannten, nur Spannschieber zum zentrischen und ausgleichenden Spannen aufweisenden Spannfutter sind die Antriebszylinder der Spannschieber über ein zentrales Zahnrad miteinander synchronisiert. Die Antriebszylinder besitzen zwei einander gegenüberliegende Kolben, die zwischen sich einen Gleitblock aufnehmen, wobei die Gleitblöcke über Zahneingriff mit dem zentralen Zahnrad kämmen.

Der Erfindung liegt daher die Aufgabe zugrunde, ein Spannfutter, insbesondere Vorderendspannfutter, der eingangs genannten Art mit verbesserten Betriebseigenschaften zum zentrischen, ausgleichenden und externen zentrischen bzw, mittenzentrierenden Spannen zu schaffen, wobei Vorderend- und Hinterendfutter mit gleichen Einbauteilen ausgeführt sein können und ein Vorderendfutter mit den Funktionen zentrisch und ausgleichend Spannen durch ein integriertes extern zentrisches Spannen ergänzt bzw. umgerüstet werden kann.

Diese Aufgabe wird erfindungsgemäß dadurch gelöst, dass jedem Zentrierschieber ein Antriebsmittel zugeordnet ist, die ihrerseits an einer zu einer Seite mit schräg ausgebildeter Verzahnung parallelen Verzahnungsseite mit einem zentralen, konzentrisch zur Drehachse angeordneten Zahnrad kämmen, wobei das zentrale Zahnrad die Bewegungen aller Zentrierschieber synchronisiert. Durch die Kopplung aller hier drei Zentrierschieber über ihre Antriebsmittel mit dem Ihnen gemeinsamen zentralen Zahnrad werden bei Beaufschlagung der Antriebsmittel die Zentrierstangen mit den aufgesetzten Spannbacken synchron nach vorne verfahren und spannen ein Rohr immer zentrisch in einem dem zu schneidenden Gewinde nahe vorgelagerten Bereich, d.h. die Spannbacken legen sich kurz vor dem Rohrende exakt an das Rohr an. Die über die Spannbacken der Zentrierschieber hinausragende frele Einspannlänge des Rohres ist somit nur äußerst gering, was ein präzises Gewindeschneiden ermöglicht.

Ein bevorzugter Vorschlag der Erfindung sieht vor, dass das Antriebsmittel der Zentrierschieber als Hohlzylinder mit einem darin vorgesehenen, von einem Druckmittel beaufschlagbaren Kolben ausgebildet ist, der an seinen beiden Druckseiten jeweils eine Druckmittelzuleitungsstange aufweist, wobei die Druckmittelzuleitungsstangen zum Anschluss an eine Druckmittelversorgungsquelle aus den Stirnenden des Hohlzylinders herausgeführt sind, und wobei sich bel Beaufschlagung der einen oder der anderen Kolbenseite des Kolbens der Hohlzylinder entsprechend zu der einen oder der anderen Seite hin über den ruhenden Kolben verschiebt und dabei den Zentrierschieber einrückt oder zum Spannen des Rohres nach vorne ausrückt. Es lässt sich damit eine kompakte Bauweise bei der Anordnung bzw. beim Einbau der extern mittenzentrierenden Zentrierschier im bzw. in das Spannfutter erreichen.

Wenn die Zentrierschieberstangen von einem Mantelgehäuse umschlossen sind, das an seinem von dem Zahnstangenabschnitt der Zentrierschieberstangen entfernten, vorderen Ende zur Befestigung in der Spannfutter-Kopfplatte mit einem Anbauflansch versehen ist, ergibt sich eine einfache Montage. Die Zentrierschieber können mit ihren Zentrierschieberstangen von vorne in die Spannfutter-Kopfplatte eingesteckt und über den Anbauflansch dann mit dieser verschraubt werden.

Nach einer bevorzugten Ausführung der Erfindung sind die Zentrierschieber ergänzend zu derart ausgebildeten Spannschiebern angeordnet, dass jedem Spannschieber einerseits in der Kopfplatte tangential zur Drehachse vorgesehene, von einem Stellmittel beaufschlagte Querschieber, die einen an einer Längsseite als Zahnstange ausgebildeten Schieberblock aufweisen, und andererseits separate, mit den Zahnstangen kämmende Zahnräder zugeordnet sind, wobei jeder Spannschieber an seiner Unterseite mit einer Mitnehmerklaue versehen ist, die zur Umlenkung der Bewegung des Querschiebers in eine rechtwinklig zur Drehachse verlaufende Anstellbewegung des Spannschiebers mit einer in dem Schieberblock des Querschiebers vorgesehenen, kulissenartigen Führungsnut im Eingriff ist, und wobei den Zahnrädern ein axial zur Drehachse ein- und ausrückbares Kopplungsritzel zugeordnet ist. Es lässt sich somit ein Spannfutter erreichen, insbesondere Vorderendfutter, das alle gewünschten Spannfunktionen, d.h. das externe zentrische Spannen einschließend, in dem Spannfutter selbst konzentriert und vereinigt. Hierbei wird eine Bewegungsumlenkung ohne Keilsysteme parallel zur Mitte des Spannfutters über den Eingriff der durch das Stellmittel beaufschlagbaren Querschieber mit den Spannschiebern in der Ebene der Kopfplatte sogleich rechtwinklig zur Drehachse möglich. Damit ergibt sich eine geringere Masse einhergehend mit einer erhöhten Dynamik sowie verkürzten Hochlauf- und Abbremszeiten der nach jeder Bearbeitung unvermeidlichen Zyklen. Beim Spannen und Lösen des Rohres übertragen große Flächen, nämlich die der Mitnehmerklaue und die der Führungsnut, in der formschlüssig gleitend sich die Mitnehmerklaue bei Stellbewegungen des Querschiebers zwangsgeführt verschiebt, hohe Kräfte mit günstiger Flächenpressung. Das zentrische und ausgleichende und extern zentrische Spannen erfordert keine Vergrößerung der Bauhöhe bzw. - länge des Spannfutters. Das zentrische Spannen erfolgt über die separat mit jeweils einem Spannschieber verbundenen Zahnräder, deren Synchronlauf und damit auch der der drei Zahnräder das eingerückte Kopplungsritzel gewährleistet, während bei ausgerücktem Kopplungsritzel ein ausgleichendes Spannen ermöglicht wird.

Ein vorteilhafter Vorschlag der Erfindung sieht vor, dass das ein- und ausrückbare Kopplungsritzel in der eingerückten Endlage mit allen drei Zahnrädern und in der ausgerückten Endlage mit nur einem Zahnrad im Eingriff ist. Das Ein- und Ausrücken des Kopplungsritzels kann manuell, von der Vorderseite des Spannfutters bzw. der Kopfplatte her frei zugänglich, erfolgen, wobei sich bei ausgerücktem Kupplungsritzel alle drei Schiebersysteme und die dazugehörenden Zahnräder unabhängig voneinander bewegen, außermittig an das Rohr anpassen und dieses spannen können.

In vorteilhafter Weiterentwicklung der Erfindung sind der Querschieber und der Spannschieber sich schräg kreuzend mit einem den Stellhub des Querschiebers mit Untersetzung auf den Anstellhub des Spannschiebers übertragenen Eingriffswinkel von Mehrnehmerklaue und Führungsnut angeordnet. Wenn dieser Winkel 30° beträgt, lässt sich eine Untersetzung von 1 zu 2 (sin 30° entspricht 0,5) erreichen, was das schnelle Spannen und Lösen begünstigt.

Nach einer Ausgestaltung der Erfindung wird als Stellmittel der Querschieber ein Zylinder vorgesehen, wobei der Schieberblock der Querschieber über eine Kolbenstange mit dem Zylinderkolben verbunden ist. Die notwendigen Bewegungen beim Spannen und Lösen lassen sich somit in einfacher Weise durchführen.

Nach einem vorteilhaften Vorschlag der Erfindung ist in der Spannfutter-Kopfplatte axial parallel verlaufend zum Kopplungsritzel ein sich mit dem Kopplungsritzel bewegungsabhängig verlagernder, mit seinem vorderen Endabschnitt in der Kopfplatte von außen sichtbarer, die ein- und ausgerückte Lage des Kopplungsritzels erkennbar machender Positionsanzeigebolzen angeordnet. Der Maschinenbediener hat somit stets genaue Kenntnis über die jeweilige Funktionslage des Kopplungsritzels und kann je nach Bearbeitungserfordernis (zentrisch mit direkter Ausrichtung zur Maschinenmitte oder ausgleichend Spannen) das Kopplungsritzel entsprechend ein- bzw. ausrücken.

Weitere Merkmale und Einzelheiten der Erfindung ergeben sich aus den Ansprüche und der nachfolgenden Beschreibung von in den Zeichnungen dargestellten Ausführungsbeispielen der Erfindung. Es zeigen:
- Fig. 1: als Einzelheit einer Werkzeugmaschine ein Spannfutter, in der Vorderansicht perspektivisch dargestellt;
- Fig. 2: ein Spannfutter in einer Darstellung wie zuvor, demgegenüber ergänzt bzw. in Kombination mit nach vorne schräg herausfahrbaren Zentrierschiebern zum mittenzentrierenden, zentrischen Spannen des Rohres im Nahbereich eines zu schneidenden Gewindes;
- Fig. 3: als Einzelheit des Spannfutters nach Fig. 2 in einer perspektivischen Darstellung allein die Anordnung der Zentrierschieber mit Kopplung über verzahnte Antriebsmittel an ein zentrales Zahnrad;
- Fig. 4: als Einzelheit der Fig. 3 einen Längsschnitt durch einen Zentrierschieber mit Verzahnungseingriff in das Antriebsmittel und das zentrale Zahnrad:
- Fig. 5: das Spannfutter der Fig. 1 in einem Querschnitt, perspektivisch dargestellt;
- Fig. 6: eine wie Fig. 5 rückwärtige, hier schematische Ansicht des Spannfutters als Prinzipskizze mit Zuordnung der Querschieber zu den Spannschiebern in sich unter einem Eingriffswinkel schräg kreuzender Lage;
- Fig. 7: das Spannfutter der Fig. 1 in einem Längsschnitt etwa entlang der Linie VII-VII; und
- Fig. 8: als Teilansicht des Spannfutters der Fig. 1 oder 2 einen Längsschnitt durch ein in drei jeweils separat mit den Spannschiebern verbundenen Zahnrädern ein- und ausrückbares Kopplungsritzel.

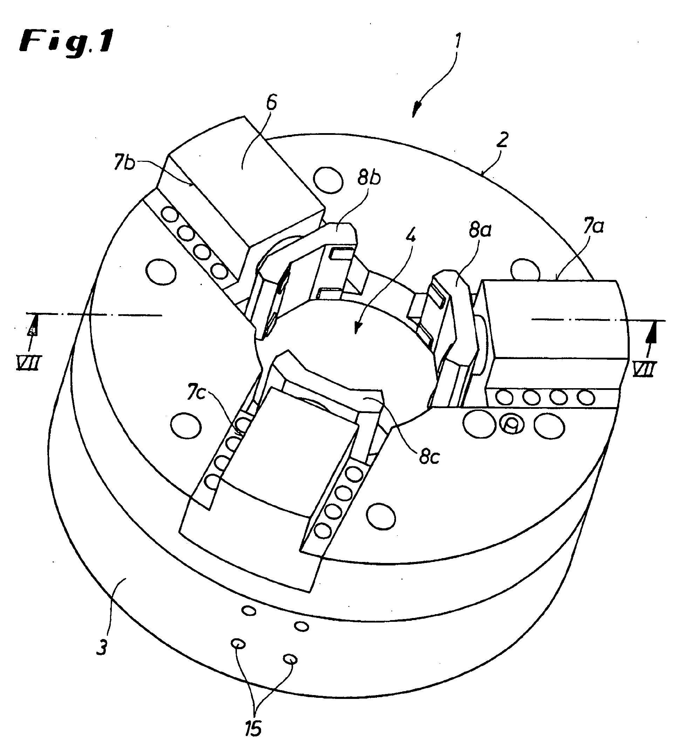

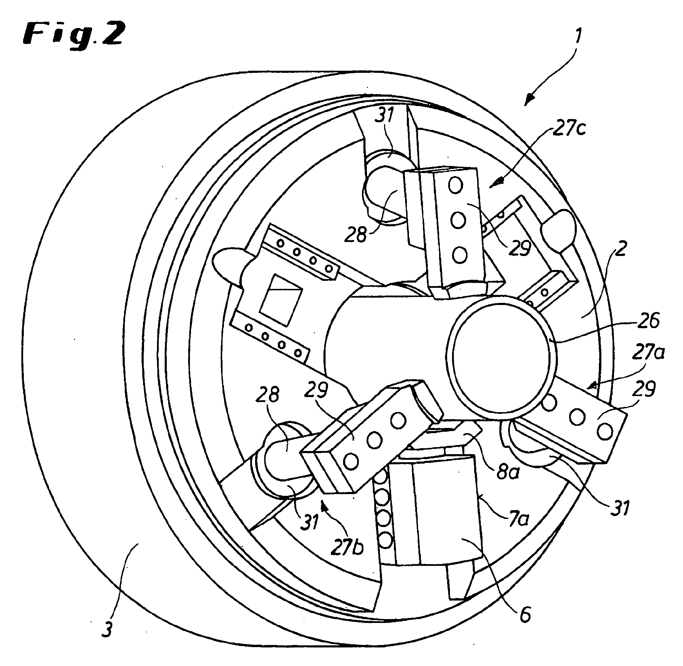

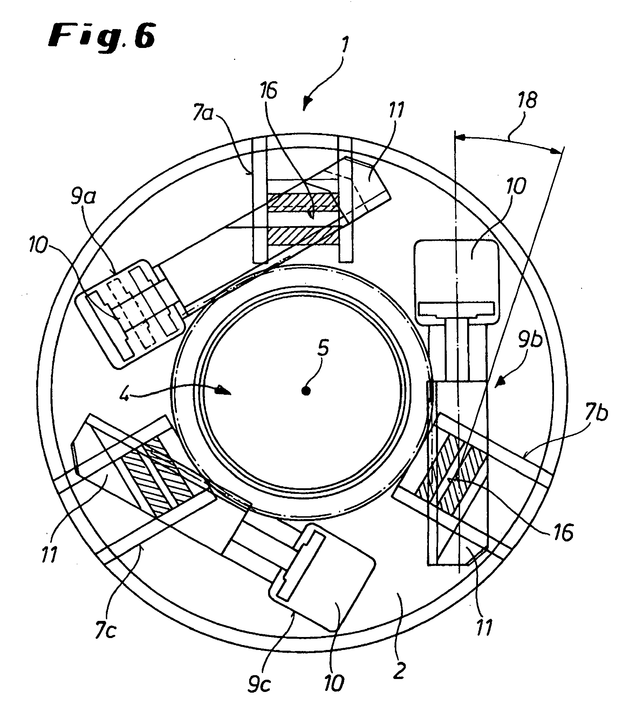

Ein in Fig. 1 gezeigtes Spannfutter 1 einer Werkzeugmaschine zum Schneiden von Gewinden bzw. Gewindeanschlüssen an Rohrenden besteht aus einer Kopfplatte 2 und einem sich nach hinten anschließenden Gehäusering 3. Zum Aufnehmen eines zu bearbeitenden Rohres 26 (vgl. Fig. 2) besitzt das Spannfutter 1 eine zentrische Durchgangsöffnung 4 deren Mitte 5 mit der Drehachse des in dem Spannfutter rotierenden Rohres zusammenfällt. Auf der Stirnseite der Kopfplatte 2 sind mit über den Umfang gleichmäßiger Verteilung drei von Abdeckungen 6 eingehauste, radial zur Mitte bzw. Drehachse 5 anstellbare Spannschieber 7a, b, c mit Spannbacken 8a, b, c angeordnet, die das Rohr zentrisch zur Mitte bzw. Drehachse 5 (vgl. Fig. 6) spannen.

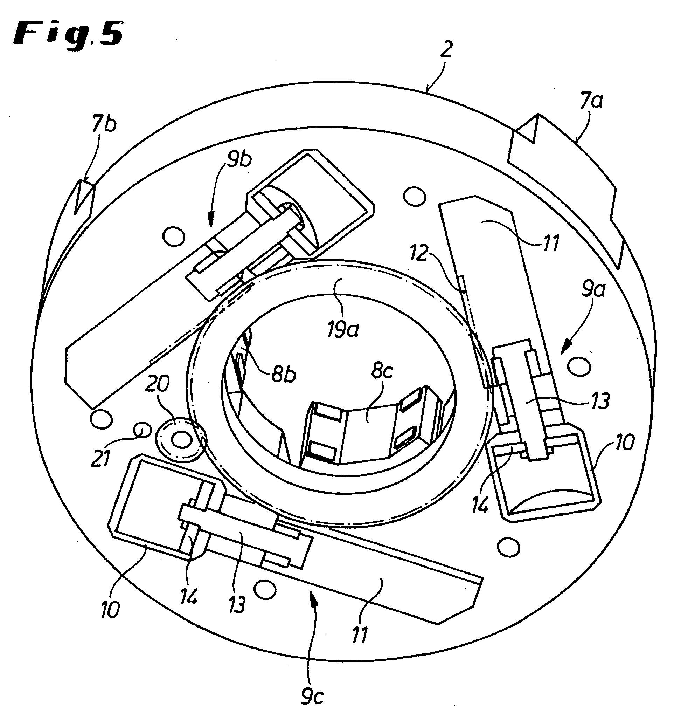

Zum Anstellen der Spannschieber 7a, b, c mit den Spannbacken 8a, b, c in Richtung auf die Mitte bzw. zur Drehachse 5 des Spannfutters 1 ist jedem Spannschieber 7a, b, c tangential zur Drehachse 5 ein in der Kopfplatte 2 integrierter Querschieber 9a, b, c zugeordnet. Diese bestehen, wie der Fig. 5 zu entnehmen ist, aus einem Hydraulikzylinder 10 als Stellmittel und einem Schieberblock 11, der an einer Längsseite als Zahnstange 12 ausgebildet ist, wobei der Schieberblock 11 über eine Kolbenstange 13 mit dem Zylinderkolben 14 verbunden ist. Zur Beaufschlagung der Zylinderkolben 14 sind die Hydraulikzylinder 10 über Druckmittelanschlüsse 15 (vgl. Fig. 1) mit einer nicht dargestellten Druckmittelversorgung verbunden.

An ihrer in Fig. 5 in der Zeichnungsebene hinten liegenden Oberseite sind die Schieberblöcke 11 mit einer schräg verlaufenden, kulissenartigen Führungsnut 16 ausgebildet, in die eine an der Unterseite der Spannschieber 7a, b, c vorgesehene Mitnehmerklaue 17 unter einem Eingriffswinkel 18 (vgl. die Schemazeichnung Fig. 6) von vorzugsweise 30° eingreift. Bei Beaufschlagung der Hydraulikzylinder 10 wird die Mitnehmerklaue 17 zwangsgeführt in der Führungsnut 16 verlagert, wobei die Spannbacken 8a, b, c in Richtung auf die Mitte bzw. Drehachse 5 des Spannfutters aus den Spannschiebern 7a, b, c herausgerückt werden. Der Schrägverlauf mit dem Eingriffswinkel 18 ermöglicht eine schnelle, kurzhubige Anstellung der Spannbacken 8a, b, c, beispielsweise bei einem Hub der Querschieber 9a, b, c von 50mm mit einem Anstellhub von 25mm.

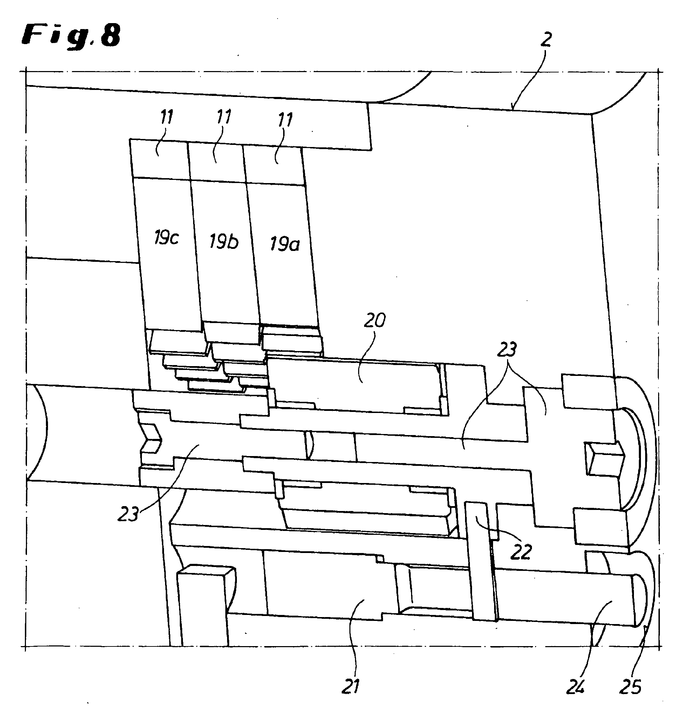

Jedem Querschieber 9a, b, c ist in dem Spannfutter 1 konzentrisch zur mittigen Durchgangsöffnung 4 von außen nach innen aufeinanderfolgend ein Zahnrad 19a, b, c zugeordnet (vgl. Fig. 8) von denen in Fig. 5 lediglich das äußere bzw. vordere Zahnrad 19a zu erkennen ist. Die Hydraulikzylinder 10 greifen mit den Zahnstangen 12 ihrer Schieberblöcke 11 in das ihnen jeweils zugeordnete Zahnrad 19a bzw. 19b bzw. 19c ein. Den Zahnrädern 19a, b, c ist ein axial zur Drehachse 5 ein- und ausrückbares Kopplungsritzel 20 zugeordnet (vgl. die Fig. 5 und 8), das in eingerückter Position mit allen Zahnrädern 19a, b, c kämmt, womit ein Synchronlauf der drei Zahnräder 19a, b, c und damit der Spannschieber 7a, b, c zum zentrischen Spannen eines Rohres erreicht werden kann.

Wenn hingegen ein ausgleichendes Spannen durchgeführt werden soll, wird das Kopplungsritzel 20 ausgerückt und ist dann nur noch mit einem, dem äußeren Zahnrad 19a im Eingriff. Es können sich somit alle drei Schiebersysteme mit den jeweils verbundenen Zahnrädern unabhängig bewegen, außermittig an das Rohr anpassen und dieses spannen.

Wie sich der einen Teilausschnitt des Spannfutters zeigenden Fig. 8 entnehmen lässt, ist axial parallel verlaufend zum Kopplungsritzel 20 ein sich mit diesem bewegungsabhängig verlagernder Positionsanzeigebolzen 21 angeordnet, hier über eine Stange bzw. einen Steg 22 mit dem Kopplungsritzel 20 verbunden. Bei im Ausführungsbeispiel manueller Ein- und Ausrückbarkeit des Kopplungsritzels 20, wozu Schraubgewindebolzen 23 zum Einsatz kommen, verlagert sich der Positionsanzeigebolzen 21 entsprechend nach innen oder nach außen, wobei ein die jeweilige Lage erkennbar machender vorderer Endabschnitt 24 entweder mehr (Kopplungsritzel 20 greift in alle Zahnräder 19a, b, c ein) oder weniger (das Kopplungsritzel 20 kämmt nur mit dem oberen bzw. vordersten Zahnrad 19a) in eine Ausnehmung (Bohrung) 25 der Spannfutter-Kopfplatte 2 eintaucht.

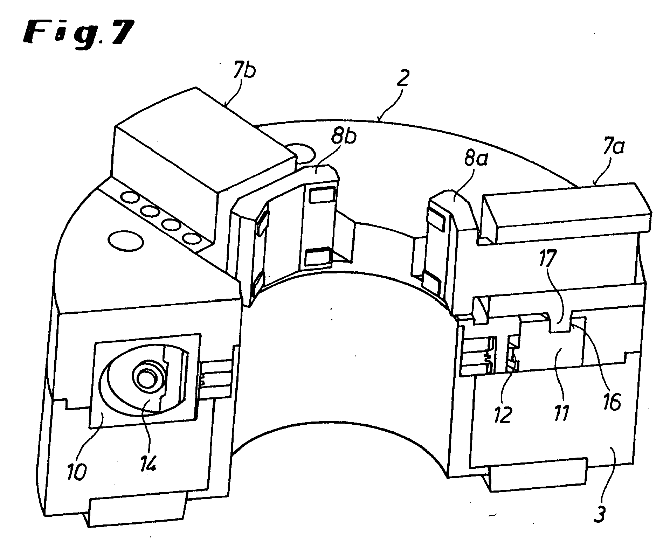

Das Spannfutter 1 der Fig. 1 sowie 5 bis 8 eignet sich sowohl als Hinterend- als auch Vorderendspannfutter und erfüllt die geforderten Spannfunktionen eines mit direkter Ausrichtung zur Maschinenmitte zentrischen Spannens und/oder eines ausgleichenden Spannens der zu bearbeitenden Rohre.

Wenn das Spannfutter 1 gemäß den Fig. 2 bis 4 ergänzend mit integrierten Zentrierschiebern 27a, b, c ausgebildet bzw. kombiniert wird, vereinigt das Spannfutter 1 bei gleichen Einbauteilen weiterhin auch das mittenzentrierende Spannen des Rohres 26 im Nahbereich des zu schneidenden Gewindes in sich. Ansonsten externe Spannmittel brauchen dann nicht mehr vorgesehen zu werden.

Wie den Fig. 2 bis 4 entnommen werden kann, sind die drei Zentrierschieber 27a, b, c mit Zentrierschieberstangen 28 nach vorne mit Neigung zum Rohr 26 hin aus dem Gehäusering bzw. Gehäuse 3 durch die Spannfutter-Kopfplatte 2 hindurch nach außen hindurchgeführt. Die Zentrierschieberstangen 28, die an ihren vorderen, freien Enden in der Höhe verstellbare Spannklauen 29 tragen, sind von einem Mantelgehäuse 30 umschlossen, das einen Anbauflansch 31 aufweist, der in der Spannfutter-Kopfplatte 2 befestigt (verschraubt) ist.

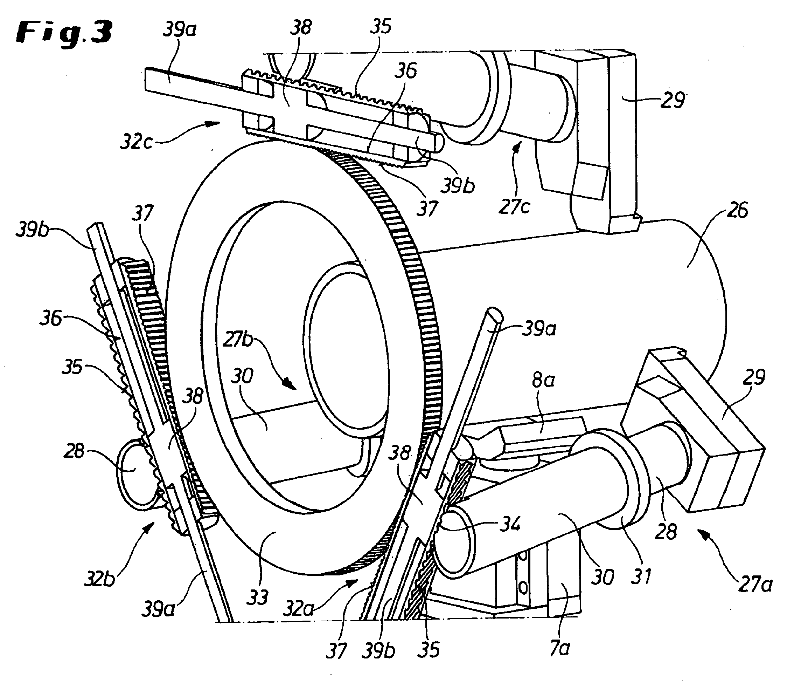

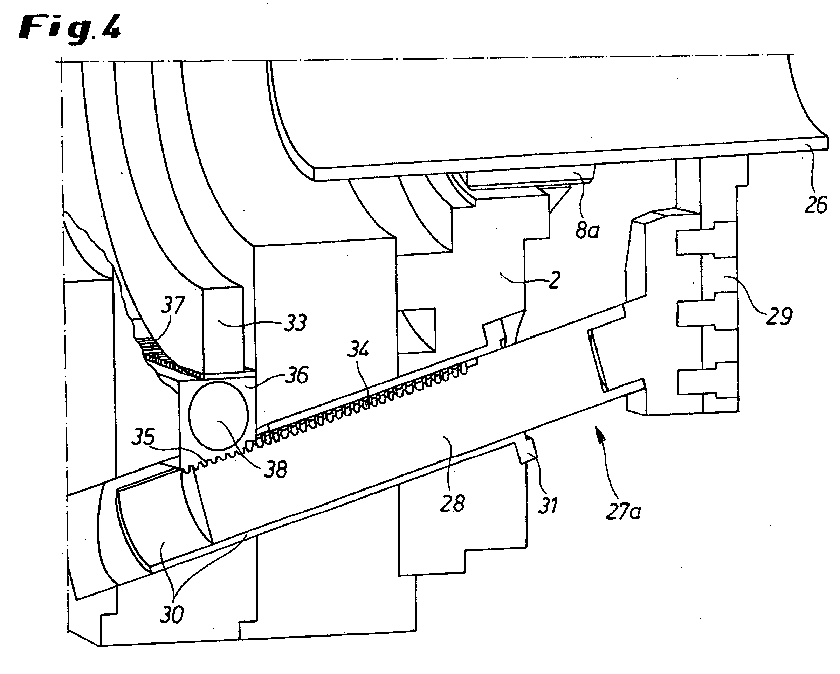

Der Zentrierschieber 27a, b, c sind über Antriebsmittel 32a, b, c mit einem die Verfahr- bzw. Stellbewegungen der Zentrierschieber 27a, b, c synchronisierenden, im Gehäuse 3 des Spannfutters 1 hinter den Zahnrädern 19a, b, c der Spannschieber 7a, b, c angeordnetem zentralen Zahnrad 33 gekoppelt. Zur synchronisierten Bewegungsübertragung stehen die Zentrierschieber 27a, b, c mit den Antriebsmitteln 32a, b, c und diese mit dem zentralen Zahnrad 33 im Verzahnungseingriff. Hierzu ist ein verzahnter Stangenabschnitt 34 der Zentrierschieberstangen 27 vorgesehen, der in einem ausgeschnittenen Bereich der Mantelgehäuse 30 der Zentrierschieber 27a, b, c (vgl. Fig. 4) mit einer schrägen Verzahnung 35 der als Hohlzylinder 36 ausgebildeten Antriebsmittel 32a, b, c kämmt, wobei eine zu der Verzahnung 35 parallele Verzahnungsseite 37 des Hohlzylinders 36 gleichzeitig in das zentrale Zahnrad 33 eingreift (vgl. Fig. 3).

In den Hohlzylindern 36 der Antriebsmittel 32a, b, c ist ein bei Druckbeaufschlagung in seiner Position verharrender Kolben 38 angeordnet, über den sich der Hohlzylinder 36 linear verschiebt und dabei je nach Beaufschlagungsrichtung die Zahnschieberstange 27a, b, c entweder nach außen verstellt oder in Richtung auf die Spannfutter-Kopfplatte 2 einrückt. Zur Druckmittelbeaufschlagung und damit Relativverschiebung der Hohlzylinder 36 zu ihren Kolben 38 gehen von beiden Seiten des Kolbens 38 aus durch die Stirnenden der Hohlzylinder 36 bis in die Wand des Gehäuses 3 des Spannfutters 1 reichende Druckmittelzuleitungsstangen 39a, b, über die die Antriebsmittel 32a, b, c bzw. deren Hohlzylinder 36 an eine Druckmittelversorgung (nicht dargestellt) angeschlossen werden können.

### Bezugszeichenliste:

- 1: Spannfutter
- 2: Kopfplatte
- 3: Gehäusering / Gehäuse
- 4: Durchgangsöffnung
- 5: Mitte (des Spannfutters)/Drehachse eines eingespannten Rohres
- 6: Abdeckung / Gehäuse
- 7a, b, c: Spannschieber
- 8a, b, c: Spannbacke
- 9a, b, c: Querschieber
- 10: Hydraulikzylinder
- 11: Schieberblock
- 12: Zahnstange
- 13: Kolbenstange
- 14: Zylinderkolben
- 15: Druckmittelanschluss
- 16: kulissenartige Führungsnut
- 17: Mitnehmerklaue
- 18: Eingriffswinkel
- 19a, b, c: Zahnrad
- 20: Kopplungsritzel
- 21: Positionsanzeigebolzen
- 22: Steg/Stange
- 23: Schraubgewindebolzen
- 24: Endabschnitt (des Positionsanzeigebolzens)
- 25: Ausnehmung (Bohrung in der Kopfplatte)
- 26: Rohr
- 27a, b, c: Zentrierschieber
- 28: Zentrierschieberstange
- 29: Spannklaue
- 30: Mantelgehäuse
- 31: Anbauflansch
- 32a, b, c: Antriebsmittel
- 33: zentrales Zahnrad
- 34: verzahnter Stangenabschnitt / Zahnstangenabschnitt
- 35: Verzahnung
- 36: Hohlzylinder
- 37: parallele Verzahnungsseite
- 38: Kolben
- 39a, b: Druckmittelzuleitungsstange

## Patentansprüche

1. Spannfutter (1) einer Werkzeugmaschine zur Bearbeitung eines rohrförmigen, um eine mit der Mitte des Spannfutters zusammenfallenden Drehachse (4) rotierenden Werkstücks (26), umfassend mindestens zwei zum Lösen und Spannen des Werkstücks radial zur Drehachse (4) anstellbar ausgebildete, stirnseitig auf und gleichförmig über den Umfang einer Spannfutter-Kopfplatte (2) verteilt angeordnete, Spannbacken (8a, b, c) tragende Spannschieber (7a, b, c) und zum externen zentrischen Spannen eines Rohres (26) aus der Spannfutter-Kopfplatte (2) mit Neigung nach vorne zu dem zu bearbeitenden Rohrende hin herauerückbare, das Rohr (26) mittels Spannklauen (29), die am vorderen, freien Ende von Zentrierschieberstangen (28) angeordnet sind, mittenzentrierende Zentrierschieber (27a, b, c), die über einen verzahnten Stangenabachnitt (34) in eine Verzahnung (35) eines Antriebsmittels (32) eingreifen,
**dadurch gekennzeichnet,**
**dass** jedem Zentrierschleber (27a, b, c) ein Antriebsmittel (32a, b, c) zugeordnet ist, die Ihrerseits an einer zu einer Seite mit schräg ausgebildeter Verzahnung (35) parallelen Verzahnungsseite (37) mit einem zentralen, konzentrisch zur Drehachse (5) angeordneten Zahnrad (33) kämmen, wobei das zentrale Zahnrad (33) die Bewegungen aller Zentrierschieber (27a, b, c) synchronisiert.

2. Spannfutter nach Anspruch 1,
**dadurch gekennzeichnet,**
**dass** das Antriebsmittel (32a, b, c) der Zentrierschieber (27a, b, o) als Hohlzylinder (36) mit einem darin vorgesehenen, von einem Druckmittel beaufschlagbaren Kolben (39) ausgebildet ist, der an seinen beiden Druckseiten jeweils eine Druckmittelzuleitungestange (39a, b) aufweist, wobei die Druckmittelzuleitungsstangen (39a, b) zum Anschluss an eine Druckmittelversorgungsquelle aus den Stirnenden des Hohlzylinders (36) herausgeführt sind, und wobei sich bei Beaufschlagung der einen oder der anderen Kolbenseite des Kolbens (38) der Hohlzylinder entsprechend zu der einen oder der anderen Seite hin über den ruhenden Kolben (38) verschiebt und dabei den Zentrierschieber (27a, b, c) einrückt oder zum Spannen des Rohres (26) nach vorne ausrückt.

3. Spannfutter nach Anspruch 1 oder 2,
**dadurch gekennzeichnet,**
**dass** die Zentrlerschieberstangen (28) von einem Mantelgehäuse (30) umschlossen sind, das an seinem von dem Zahnstangenabschnitt (34) der Zentrierschieberstangen (28) entfernten, vorderen Ende zur Befestigung in der Spannfutter-Kopfplatte (2) mit einem Anbauflansch (31) versehen ist.

4. Spannfutter nach einem der Ansprüche 1 bis 3,
**dadurch gekennzeichnet,**
**dass** die Zentrierschieber (27a, b, c) ergänzend zu derart ausgebildeten Spannschiebern (7a, b, c) angeordnet sind, dass jedem Spannschieber (7a, b, c) einerseits in der Kopfplatte (2) tangential zur Drehachse (5) vorgesehene, von einem Stellmittel (10) beaufschlagte Querschieber (9a, b, c), die einen an einer Längsseite als Zahnstange (12) ausgebildeten Schieberblock (11) aufweisen, und andererseits separate, mit den Zahnstangen (12) kämmende Zahnräder (19a, b, c) zugeordnet sind, wobei jeder Spannschieber (7a, b, c) an seiner Unterseite mit einer Mitnehmerklaue (17) versehen ist, die zur Umlenkung der Bewegung des Querschlebers (9a, b, c) in eine rechtwinklig zur Drehachse (5) verlaufende Anstellbewegung des Spannschiebers (7a, b, c) mit einer in dem Schieberblock (11) des Querschiebers (9a, b, c) vorgesehenen, kulissenartigen Führungsnut (16) im Eingriff ist, und wobei den Zahnrädern (19a, b, c) ein exial zur Drehachse (5) ein- und ausrückbares Kopplungsritzel (20) zugeordnet ist.

5. Spannfutter nach Anspruch 4,
**dadurch gekennzeichnet,**
**dass** die Querschieber (9a, b, c) und die Spannechieber (7a, b, c) sich schräg kreuzend, mit einem den Stellhub des Querschiebers (9a, b, c) mit Untersetzung auf den Anstellhub des Spannschiebers (7a, b, c) übertragenden Eingriffswinkel (18) von Mitnehmerklaue (17) und Führungsnut (16) angeordnet sind.

6. Spannfutter nach Anspruch 4 oder 5,
**dadurch gekennzeichnet,**
**dass** das ein- und ausrückbare Kopplungsritzel (20) in der eingerückten Endlage mit allen drei Zahnrädern (19a, b, c) und in der ausgerückten Endlage nur mit einem Zahnrad (19a) im Eingriff ist.

7. Spannfutter nach einem der Ansprüche 4 bis 6,
**gekennzeichnet durch**
Zylinder (10) als Stellmittel der Querschieber (9a, b, c), deren Schieberblock (11) über eine Kolbenstange (13) mit dem Zylinderkolben (14) verbunden ist.

8. Spannfutter nach einem der Ansprüche 4 bis 7,
**dadurch gekennzeichnet,**
**dass** in der Spannfutter-Kopfplatte (2) axial parallel verlaufend zum Kopplungsritzel (20) ein sich mit dem Kopplungsritzel (20) bewegungsabhängig verlagernder, mit seinem vorderen Endabschnitt (24) in der Kopfplatte (2) von außen sichtbarer, die ein- bzw, ausgerückte Lage des Kopplungsritzels (20) erkennbar machender Positionsanzeigebolzen (21) angeordnet ist.

## Claims

1. A chuck (1) for a machine tool for machining a tubular workpiece (26) which rotates about a rotational axis (4) that coincides with the center of the chuck, comprising at least two chucking slides (7a, b, c) that are designed to be positionable radially with respect to the rotational axis (4) in order to release and chuck the workpiece, are arranged on the end side of a chuck head plate (2) and distributed uniformly around the circumference thereof, and carry chucking jaws (8a, b, c), and comprising centering slides (27a, b, c), for the external central chucking of a tube (26), which can be disengaged from the chuck head plate (2) with a forward inclination towards the end of the tube to be machined and center the tube (26) by means of chucking claws (29) which are arranged at the front free end of centering slide rods (28), said centering slides engaging via a toothed rod section (34) with a toothing (35) of a drive means (32), **characterized in that** each centering slide (27a, b, c) is assigned a drive means (32a, b, c) meshing, for their part, on a toothing side (37) parallel to the side with the angled toothing (35), with a central toothed wheel (33) arranged concentrically to the rotational axis (5), wherein the central toothed wheel (33) synchronizes the movements of all centering slides (27a, b, c).

2. The chuck according to claim 1, **characterized in that** the drive means (32a, b, c) of the centering slides (27a, b, c) are formed as hollow cylinders (36) provided therein with a piston (38) that can be acted on by a pressure means and having a pressure means supply rod (39a, b) at each of its two pressure sides, wherein the pressure means supply rods (39a, b) extend from the end faces of the hollow cylinder (36) for connection to a pressure means supply source, and wherein upon pressurization on the one or the other piston side of the piston (38), the hollow cylinder shifts accordingly via the resting piston (38) piston towards the one or the other side, thereby retracting the centering slide (27a, b, c) or advancing it for chucking the tube (26).

3. The chuck according to claim 1 or 2, **characterized in that** the centering slide rods (28) are enclosed by a housing sleeve (30) provided with a mounting flange (31) at its front end remote from the toothed rod section (34) of the centering slide rods (28) for mounting the chuck head plate (2).

4. The chuck according to any one of claims 1 to 3, **characterized in that** the centering slides (27a, b, c) are arranged supplementary to the chucking slides (7a, b, c) formed in such a manner, that to each chucking slide (7a, b, c) there are assigned, on the one hand, cross slides (9a, b, c) which are provided in the head plate (2), are arranged tangential to the rotation axis (5) and are acted on by a positioning means (10) and which have a slide block (11) formed at a longitudinal side as a toothed rack (12), and, on the other hand, separate toothed wheels (19a, b, c) meshing with the toothed racks (12), wherein each chucking slide (7a, b, c) is provided at its bottom with a follower claw (17) which is in engagement with a link-type guide groove (16) provided in the slide block (11) of the cross slide (9a, b, c) and which serves for redirecting the movement of the cross slide (9a, b, c) into a positioning movement of the chuck slide (7a, b, c) that runs perpendicular to the rotational axis (5), and wherein a coupling pinion (20) that can be engaged or disengaged axially with respect to the rotational axis (5) is assigned to the toothed wheels (19a, b, c).

5. The chuck according to claim 4, **characterized in that** the cross slides (9a, b, c) and the chucking slides (7a, b, c) are arranged so as to cross one another diagonally at a pressure angle (18) of the follower claw (17) and the guide groove (16), said pressure angle converting the positioning stroke of the cross slide (9a, b, c) with reduction to the positioning stroke of the chuck slide (7a, b, c).

6. The chuck according to claim 4 or 5, **characterized in that** the engageable and disengageable coupling pinion (20) is in engagement with all three toothed wheels (19a, b, c) in the engaged end position, and is in engagement only with one toothed wheel (19a) in the disengaged end position.

7. The chuck according to any one of claims 4 to 6, **characterized by** cylinders as positioning means for the cross slides (9a, b, c), the slide block (11) of which is connected to the cylinder piston (14) via a piston rod (13).

8. The chuck according to any one of claims 4 to 7, **characterized in that** an position indicating bolt (21) is mounted in the chuck head plate (2) and extends axially parallel to the coupling pinion (20) and shifts depending on the movement of the coupling pinion (20), which position indicating bolt is visible with its front end section (24) in the head plate (2) and indicates the engaged and/or disengaged position of the coupling pinion (20).

## Revendications

1. Mandrin de serrage (1) d'une machine-outil pour l'usinage d'une pièce (26) tubulaire, en rotation autour d'un axe de rotation (4) coïncidant avec le centre du mandrin de serrage, comprenant au moins deux coulisseaux de serrage (7a, b, c) portant des mors de serrage (8a, b, c), conçus de manière à pouvoir être appliqués radialement par rapport à l'axe de rotation (4) pour le détachement et le serrage de la pièce usinée et agencés du côté frontal sur une plaque supérieure (2) du mandrin de serrage et répartis uniformément sur la périphérie de celle-ci et des coulisseaux de centrage (27a, b, c) pour le serrage centré externe d'un tube (26), pouvant être relâché de la plaque supérieure (2) du mandrin de serrage avec inclinaison vers l'avant par rapport à l'extrémité de tube à usiner, centrant au centre le tube (26) au moyen de griffes de serrage (29) disposées sur l'extrémité avant libre des tiges de coulisseau de centrage (28), qui viennent en prise par le biais d'une section de tige dentée (34) dans une denture (35) d'un moyen d'entraînement (32) **caractérisé en ce qu'**un moyen d'entraînement (32a, b, c) est attribué à chacun des coulisseaux de centrage (27a, b, c) qui s'engrènent de leur côté sur un côté de denture (37) parallèle à un côté avec une denture (35) constituée de manière oblique avec une roue dentée (33) centrale, disposée de manière concentrique par rapport à l'axe de rotation (5), pour lequel la roue dentée (33) centrale synchronise les mouvements de tous les coulisseaux de centrage (27a, b, c).

2. Mandrin de serrage selon la revendication 1 **caractérisé en ce que** le moyen d'entraînement (32a, b, c) des coulisseaux de centrage (27a, b, c) est réalisé sous la forme d'un cylindre creux (36) avec un piston (38) prévu dedans, pouvant être précontraint par un moyen de pression, qui comporte respectivement sur ses deux côtés de pression une tige d'amenée du moyen de pression (39a, b), pour lequel les tiges d'amenée du moyen de pression (39a, b) sont guidées hors des extrémités frontales du cylindre creux (36) pour raccordement à une source d'alimentation de moyen de pression et pour lequel lors de la précontrainte de l'un ou de l'autre côté de piston du piston (38), le cylindre creux se déplace conformément à l'un ou l'autre côté sur le piston (38) au repos et engrène les coulisseaux de centrage (27a, b, c) ou désengrène vers l'avant pour le serrage du tube (26).

3. Mandrin de serrage selon la revendication 1 ou 2 **caractérisé en ce que** les tiges de coulisseau de centrage (28) sont entourées d'un boîtier de gainage (30) qui est muni sur son extrémité avant éloignée de la section de crémaillère (34) des tiges de coulisseau de centrage (28) d'une bride de montage (31) pour fixation dans la plaque supérieure (2) de mandrin de serrage.

4. Mandrin selon l'une quelconque des revendications 1 à 3 **caractérisé en ce que** les coulisseaux de centrage (27a, b, c) sont agencés en complément des coulisseaux de serrage (7a, b, c) de telle sorte que chaque coulisseau de serrage (7a, b, c) est pourvu d'une part de coulisseaux transversaux (9a, b, c) précontraints par un moyen de réglage (10), prévus dans la plaque supérieure (2) tangentiellement à l'axe de rotation (5), qui comportent un bloc de coulisseau (11) conçu comme crémaillère (12) sur un côté longitudinal, et pourvu d'autre part de roues dentées (19a, b, c) séparées engrenant avec les crémaillères (12), chaque coulisseau de serrage (7a, b, c) étant pourvu sur son côté inférieur d'une patte d'entraînement (17) en prise avec une rainure de guidage (16) de genre coulisse, prévue dans le bloc de coulisseau (11) du coulisseau transversal (9a, b, c) pour dévier le mouvement du coulisseau transversal (9a, b, c) en un mouvement d'application du coulisseau de serrage (7a, b, c) effectué à angle droit par rapport à l'axe de rotation (5), et un pignon d'accouplement (20) engrenable et désengrenable axialement par rapport à l'axe de rotation (5) étant attribué aux roues dentées (19a, b, c).

5. Mandrin selon la revendication 4 **caractérisé en ce que** les coulisseaux transversaux (9a, b, c) et les coulisseaux de serrage (7a, b, c) sont agencés de manière à se croiser en biais avec un angle d'attaque (18) entre la patte d'entraînement (17) et la rainure de guidage (16) transmettant de façon démultipliée la course de réglage du coulisseau transversal (9a, b, c) à la course d'attaque du coulisseau de serrage (7a, b, c).

6. Mandrin selon la revendication 4 ou 5 **caractérisé en ce que** le pignon d'accouplement (20) engrenable et désengrenable est en prise avec les trois roues dentées (19a, b, c) dans la position finale engrenée et en prise avec une seule roue dentée (19a) dans la position finale désengrenée.

7. Mandrin selon la revendication 4 à 6 **caractérisé par** des cylindres (10) en tant que moyen de réglage des coulisseaux transversaux (9a, b, c) dont le bloc de coulisseau (11) est relié au piston de cylindre (14) par le biais d'une tige de piston (13).

8. Mandrin selon l'une quelconque des revendications 4 à 7 **caractérisé en ce qu'**un boulon d'indication de position (21) est agencé dans la plaque supérieure (2) du mandrin de serrage en s'étendant axialement parallèlement au pignon d'accouplement (20), indiquant la position engrenée ou désengrenée du pignon d'accouplement (20) et se déplaçant en fonction du mouvement du pignon d'accouplement (20), tout en étant visible de l'extérieur avec sa section finale avant (24) dans la plaque supérieure (2).
